# EUROPÄISCHE PATENTSCHRIFT

(11) **EP 1 034 462 B1**
(45) Veröffentlichungstag und Bekanntmachung des Hinweises auf die Patenterteilung: **27.11.2002**
(21) Anmeldenummer: 98956868.8
(22) Anmeldetag: 23.10.1998
(51) Int. Cl.: G05B 19/404

(54) **VERFAHREN UND VORRICHTUNG ZUR MESSUNG VON LAGE UND/ODER ORIENTIERUNG ZUSAMMENWIRKENDER MASCHINENEINHEITEN**
METHOD AND DEVICE FOR MEASURING THE POSITION AND/OR ORIENTATION OF INTERACTING MACHINE UNITS
PROCEDE ET DISPOSITIF PERMETTANT DE MESURER LA POSITION ET/OU L'ORIENTATION DES DIFFERENTS ELEMENTS CONSTITUTIFS D'UNE MACHINE

(30) Priorität: 26.11.1997 DE 19752290
(43) Veröffentlichungstag der Anmeldung: 13.09.2000
(73) Patentinhaber: Hüller Hille GmbH, 71636 Ludwigsburg (DE)
(72) Erfinder: HORN, Wolfgang, D-74385 Pleidelsheim (DE); REIBETANZ, Thomas, D-71711 Murr (DE); SCHMID, Martin, D-71640 Ludwigsburg (DE); STENGELE, Gerald, D-76327 Pfinztal (DE)
(74) Vertreter: Dahlkamp, Heinrich-Leopold, Dipl.-Ing.
(86) Internationale Anmeldenummer: EP9806734
(87) Internationale Veröffentlichungsnummer: WO99028797

(56) Entgegenhaltungen:
- EP-A- 0 126 388
- EP-A- 0 599 020
- EP-A- 0 618 520
- EP-A- 0 737 844
- WO-A-97/46925
- DE-A- 4 028 006
- DE-A- 19 711 500
- GB-A- 2 255 636
- GB-A- 2 310 150
- US-A- 4 621 926
- US-A- 4 676 649

## Beschreibung

Die Erfindung bezieht sich auf ein Verfahren und eine Vorrichtung zur Messung von Lage und/oder Orientierung zusammenwirkender Maschineneinheiten gemäß Oberbegriff der Ansprüche 1 und 9.

Unter Maschineneinheiten werden nachfolgend nicht nur bei Werkzeugmaschinen die Werkzeuge und Werkstücke mit ihren entsprechenden Halterungen, insbesondere Arbeitsspindeln und Werkzeugtischen verstanden. Es kann sich auch allgemein um Operationseinheiten, z.B. auch um Handlings- und Meßeinheiten handeln, deren Lage und/oder Orientierung im Vergleich zu einer zweiten Einheit, z.B. zu einer zu bearbeitenden Baugruppe, exakt gemessen werden muss.

Bei der Bestimmung von Lage und / oder Orientierung eines Körpers ("Meßobjekt") in der Ebene oder im Raum lassen sich die folgenden an sich bekannten Messaufgaben unterscheiden:
**Messungen in der Ebene:**
   - Position in der Ebene (z.B. X / Y im kartesischen Koordinatensystem )
   - Orientierung in der Ebene um eine Drehachse
   - Position und Orientierung in der Ebene.
**Messungen im Raum:**
   - Position im Raum (z.B. X / Y / Z im kartesischen Koordinatensystem )
   - Orientierung im Raum um 1 bis 3 Drehachsen
   - Position und Orientierung

Bei einer Werkzeugmaschine gehört es z. B. zum Stand der Technik, dass die Bewegungen des Werkzeughalters mit dem Werkzeug in X-, Y- und Z- Richtung durch serielle Wegmeßsysteme z. B. mit Hilfe von Maßstäben erfaßt werden. In ähnlicher Weise kann auch die Bewegung des Werkstückhalters mit dem darauf oder daran befestigten Werkstücke erfaßt und kontrolliert werden. Bekannt ist es auch, Drehungen von Maschineneinheiten über Winkelmeßeinrichtungen zu erfassen und zu regeln. Bei diesen bekannten Systemen besteht das Problem, daß thermische, statische oder dynamische Einflüsse auf die Maschinenstruktur nicht oder nur teilweise erfaßt werden und es insofern zu Fehlern bei der Messung und Bearbeitung der Werkstücke kommen kann.

Aus der DE 34 45 254 A1 ist eine Verstelleinrichtung für nebeneinander angeordnete und in gegenseitigem Abstand einachsig verfahrbare Bearbeitungseinheiten bekannt, wobei zur Erfassung des Abstandes der einzelnen Bearbeitungseinheiten eine nach dem Triangulationsmeßprinzip arbeitende, stationär neben den Einheiten angeordnete Distanzmeßeinrichtung dient. Hierbei sind in deren praktisch parallelen Lichtstrahl selektiv Reflektoren der einzelnen Bearbeitungseinheiten einführbar und der Auftreffpunkt des auf alle Reflektoren unter dem gleichen Einfallswinkel auftreffenden Lichtstrahls wird von einer Meßoptik abgebildet. Die Lage des abgebildeten Auftreffpunktes ist dabei ein Maß für die Distanz und soll für die Verstellung der Bearbeitungseinheit in die gewünschte Position verwendet werden. Dieses Meß- und Verstellsystem erfaßt aber nur Lageänderungen in einer Richtung.

In der EP 599 020 A1 ist ein Verfahren und eine Vorrichtung zur Kontrolle der Positionierung und Reduzierung der Vibration in einem Werkzeugmaschinensystem beschrieben, wobei an den Maschineneinheiten Beschleunigungssensoren in Richtung der Bewegungsachse angebracht sind, um Schwingung zu unterdrücken. Die Messung ist dabei von den Antriebsachsen der Maschineneinheit abhängig.

In der US-A 4,621,926 ist ein Interferometersystem zur genauen Kontrolle der Bewegung von Objekten beschrieben, wobei nur die Lage einer Maschineneinheit im Raum und nicht die Lage zusammenwirkender Maschineneinheit im Verhältnis zueinander gemessen wird.

Der Erfindung liegt daher die Aufgabe zugrunde, ein gattungsgemäßes Verfahren vorzuschlagen, bei dem auf einfache Weise eine Messung der Lage und/oder Orientierung zusammenwirkender Maschineneinheiten erfolgt, sodass thermische, statische oder dynamische Einflüsse auf die Maschinenstruktur, insbesondere Verformungen ganz oder teilweise zum Zwecke einer Kompensation erfaßt werden und auf die konventionellen Meßmethoden weitgehend verzichtet werden kann.

Die Lösung dieser Aufgabe ist in den Ansprüchen 1 und 9 angegeben. Die Unteransprüche 2 bis 8 sowie 10 und 11 enthalten sinnvolle ergänzende Vorschläge.

Bei dem erfindungsgemäßen Verfahren können verschiedene Sensoren in unterschiedlichen Kombinationen angewandt werden. Wichtig ist hierbei aber, daß die Sensoren parallel wirken und unabhängig von den Antriebsachsen der Maschineneinheiten kontinuierlich oder in möglichst kurzen Abständen regelmäßig messen, ohne dabei die Sensoren und/oder die Maschineneinheiten in einer speziellen Meßposition verfahren zu müssen. Die Sensoren messen dabei mindestens zwei der Größen Abstand, Raumwinkel, Orientierung oder eine ihrer Änderungsgrößen. Zu den Änderungsgrößen kann dabei zum Beispiel die Beschleunigung zählen. Vorgesehen sind also im wesentlichen geometrische oder kinematische Sensoren, nicht gemeint sind zum Beispiel an verschiedenen Stellen eines Maschinenständers angebrachte Temperaturfühler, mit denen Temperaturänderungen und damit indirekt auch in begrenztem Maße temperatubedingte Längenänderungen gemessen werden können.

Vorzugsweise werden erfindungsgemäß soweit möglich berührungslos messende Sensoren verwendet. Die verschiedenen erfindungsgemäßen Meßvarianten sind in den Unteransprüchen näher beschrieben.

Die Sensoren in Verbindung mit der Art ihrer Anbringung bzw. Wirkung lassen sich in zwei Klassen unterteilen.

In der ersten Klasse werten sie direkte Koordinaten oder Änderungen dieser Koordinaten bezüglich der benutzten Bezugssysteme aus. Darunter fallen zunächst die klassischen Meßsysteme (Längen- und Winkelmeßsysteme) sowie berührungslose Meßsysteme, wie z.B. Laserinterferometer, wenn sichergestellt ist, daß der im betrachteten kartesischen Koordinatensystem zu messende Freiheitsgrad stets mit der Meßachse identisch ist. Auch sog. Trägheitsmeßsysteme gehören in diese Klasse. Ist nämlich das betrachtete kartesische Koordinatensystem ein Inertialsystem, registrieren diese die Änderungen in den Koordinatenachsen direkt. Ein translatorisches Trägheitsmeßsystem ist z.B. ein Beschleunigungsaufnehmer, rotatorische Trägheitsmeßsysteme sind z.B. Kreisel oder Ringlaser.

Bei Mitgliedern der zweiten Sensor-Wirkungs-Klasse werden die Eigenschaften von Punkt-zu-Punkt Beziehungen zwischen Punkten, deren Lage im benutzten Bezugssystem bekannt ist oder gemessen wird (= Punkte der Meßbasis) sowie Punkten, deren Lage in einem mit dem Meßobjekt bewegten Koordinatensystem bekannt ist oder gemessen wird (= Objektpunkte) ausgewertet. Solche Eigenschaften von Punkt-zu-Punkt Beziehungen sind z.B. Abstände zwischen den zwei Punkten sowie der oder die Raumwinkel der Verbindungslinie zwischen den zwei Punkten ("Meßstrahlen") im benutzten Bezugssystem. Zur Bestimmung von Abständen kommen z.B. Laser-Interferometer in Betracht, zur Bestimmung von Raumwinkeln entsprechende Geräte.

Bei der Messung von Lage und/oder Orientierung eines Meßobjektes in der Ebene/im Raum werden bei Sensoren aus der zweiten Sensor-Wirkungs-Klasse üblicherweise mehrere Sensoren gleichzeitig ausgewertet, um aus der Gesamtheit sämtlicher Messungen, teilweise unter Einbeziehung bereits bekannter Informationen betreffend die Anordnung der verschiedenen Sensoren und Punkte, die gewünschte Position und ggf. Orientierung zu bestimmen. Der Umstand, daß die Messungen der einzelnen Sensoren aus der zweiten der o.g. Sensorklassen nicht mit den zu messenden Achsbewegungen übereinstimmen, sondern aus der Gesamtheit der Messungen sämtliche interessierenden Daten berechnet werden, wird als "parallel wirkende Sensoren" bezeichnet. Im Bereich der Hexapod-Maschinen werden auf der Basis von sechs nicht mit den Koordinatenachsen eines Bezugssystems zusammenfallenden Abstandsmessungen, die Lage und Orientierung von Arbeitsplattformen bestimmt, wobei die von den Sensoren gemessenen Freiheitsgrade stets mit den Antriebsachsen der Maschinen zusammenfallen. Die Anwendung solcher Meßprinzipien unabhängig von den Maschinenachsen, z.B. mit berührungslosen Sensoren, stellt dagegen im Bereich des Maschinenbaus ein Novum dar.

Die Erfindung wird anhand der beigefügten Tabellen 1 bis 3 und der Figuren 1 bis 13 beispielsweise näher erläutert. Es zeigen:
- Tabelle 1: Sensortypen
- Tabelle 2: Symbole für weitere Sensortypen
- Tabelle 3: Anwendungsformen paralleler Meßprinzipien

- Figur 1: Positionsbestimmung aus 3 Abstandsmessungen
- Figur 2: Positionsbestimmung aus 2 Abstands- und 1 Raumwinkel-Messung
- Figur 3: Positionsbestimmung aus 1 Abstands- und 2 Raumwinkel-Messungen
- Figur 4: Positionsbestimmung aus 3 Raumwinkel-Messungen ("Triangulation")
- Figur 5: die Bestimmung von Lage und Orientierung aus 9 Abstandsmessungen gem. Variante IIa).
- Figur 6: die Bestimmung von Lage und Orientierung aus 6 Abstandsmessungen unter Verwendung dreier Objektpunkt-Abstände gem. Variante IIb).
- Figur 7: zeigt die Bestimmung von Lage und Orientierung aus 9 Raumwinkelmessungen gem. Variante IIa).
- Figur 8: die Bestimmung von Lage und Orientierung aus 6 Raumwinkelmessungen unter Verwendung dreier Objektpunkt-Abstände gem. Variante IIb).
- Figur 9: Direkte Messung zwischen zwei Maschineneinheiten
- Figur 10: Vermessung zweier Maschineneinheiten vom Maschinenständer
aus über eine Basis
- Figur 11: Vermessung zweier Maschineneinheiten vom Maschinenständer
aus über zwei Basen
- Figur 12: Vermessung zweier Maschineneinheiten von einer hallenfesten
Basis aus
- Figur 13: Direkte Vermessung eines Maschinenständers

Soll über die Positionsbestimmungen hinaus auch die Orientierung des Meßobjekts um eine bis drei Koordinatenachsen bestimmt werden, gibt es prinzipiell zwei Varianten.
I) Man verwendet Orientierungs-Sensoren gemäß der ersten der o.g. Sensorklassen, d.h., man mißt die Orientierungen direkt.
II) Man bestimmt die Positionen weiterer Punkte des Objekt-Koordinatensystems ("Objektpunkte") gemäß den o.g. Möglichkeiten und damit die Orientierung des Objekt-Koordinatensystems selbst.

Zur Möglichkeit nach II) ist zu bemerken, daß sich aus zwei bekannten Objektpunkten bereits die Orientierung um zwei Koordinatensystem-Achsen bestimmen lassen. Zur Bestimmung von drei Orientierungen werden dann die Positionen dreier Objektpunkte benötigt.

Stehen zur Positionsbestimmung der zusätzlichen Objektpunkte Informationen über den Abstand / die Abstände / Winkel und Abstände der Objekt-Punkte untereinander zur Verfügung, reduziert sich die Anzahl der benötigen Sensoren um einen (bei Bestimmung eines zusätzlichen Objektpunktes bei einem berücksichtigten Abstand) bzw. um bis zu drei (bei Bestimmung zweier zusätzlicher Objektpunkte bei drei berücksichtigten Abständen oder Winkeln). Die Zahlen entsprechen andererseits genau der Anzahl notwendiger Sensoren die notwendig ist, um z.B. bei vorhandener thermischer Drift diese Objektpunkt-Abstände zu überwachen. Für die Variante II) ergeben sich damit die folgenden Untervarianten:
IIa) Positionsbestimmung weiterer Objektpunkte lediglich unter Verwendung der Punkt-zu-Punkt Beziehungen zwischen Basis- und Objektpunkten.
IIb) Positionsbestimmung weiterer Objektpunkte unter Einbeziehung der Punkt-zu-Punkt Beziehungen der Objektpunkte untereinander.

Bei der Variante IIb) sind i.A. größere Einschränkungen im Anwendungsraum notwendig als bei IIa), da in diesen Fällen die mehrfachen Lösungen der i.d.R. nichtlinearen Gleichungssysteme näher beieinander liegen oder da wegen der Nähe von Singularitäten nur ungenaue Positionsbestimmungen möglich sind.

Zur vollständigen Bestimmung von Lage und Orientierung eines Meßobjektes gemäß der Varianten lla) und IIb) sollen von den vielfältigen Möglichkeiten jeweils zwei typische Beispiele angegeben werden und zwar jeweils lediglich unter Verwendung von Abstands- bzw. Winkefsensoren.

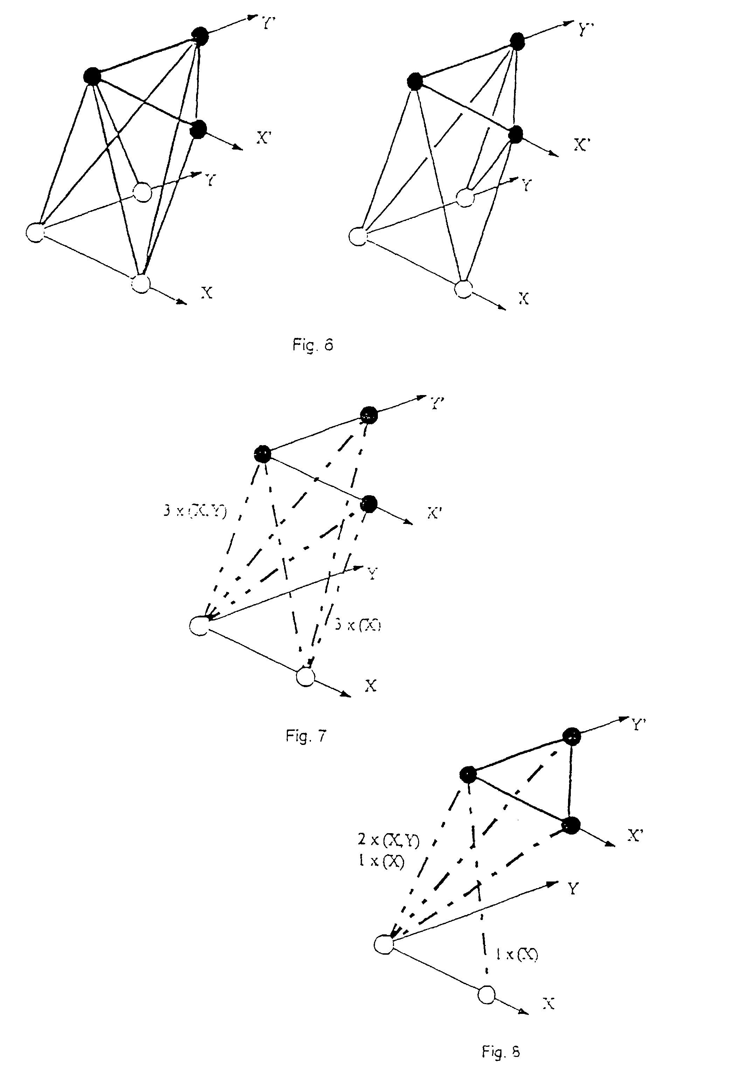

Nach Figur 5 wird jeder Objektpunkt gem. der Positionsbestimmung nach Variante 1 behandelt.

In der linken Abbildung der Figur 6 wird ein Objektpunkt (hier: der im Ursprung des (.)'- bzw. Objekt-Koordinatensystems gelegene) gem. der Positionsbestimmung nach Variante 1 behandelt. Unter Verwendung der Objektpunkt-Abstände werden für die weiteren Punkte nur 2 bzw. 1 Abstandsmessung(en) benötigt. In der rechten Abbildung der Figur 6 werden pro Objektpunkt zwei Abstandsmessungen ausgewertet, ähnlich der Aktor-Anordnung bei vielen Hexapod-Maschinen.

Nach Figur 7 wird jeder Objektpunkt gem. der Positionsbestimmung nach Variante 4 behandelt.

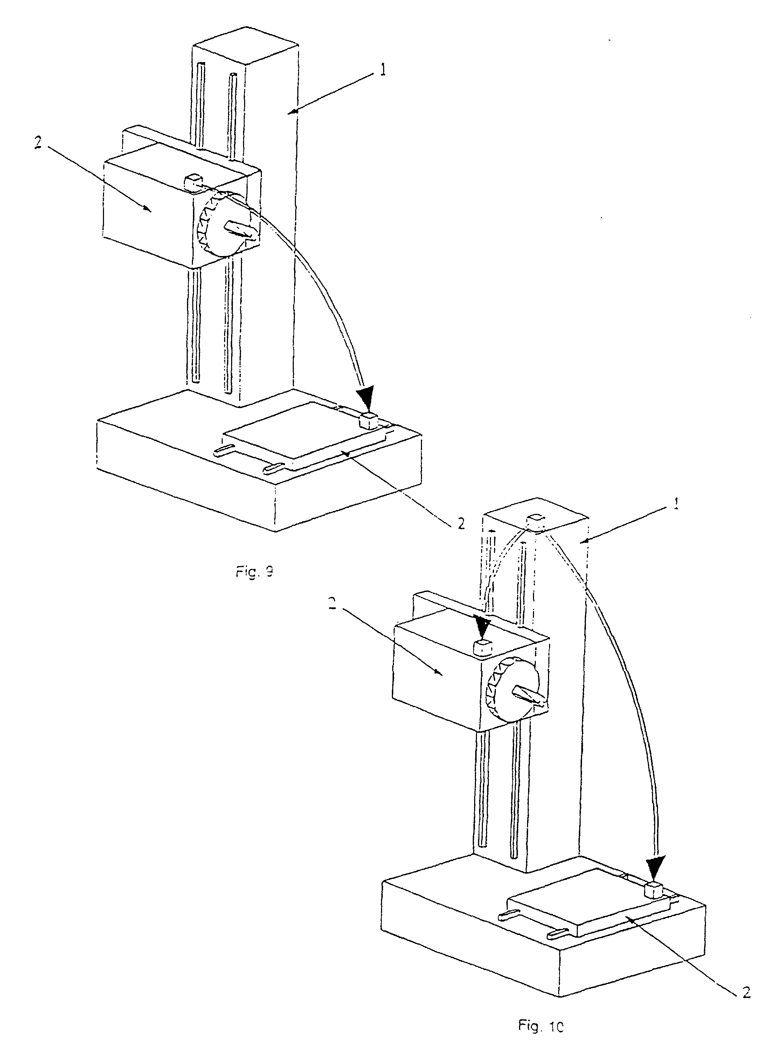

Nach Figur 8 wird ein Objektpunkt (hier: der im Ursprung des (.)'- bzw. Objekt-Koordinatensystems gelegene) gem. der Positionsbestimmung nach Variante 4 behandelt. Unter Verwendung der Objektpunkt-Abstände werden für die weiteren Punkte nur 2 bzw. 1 Raumwinkelmessung(en) benötigt.
Bis zu dieser Stelle wurde die Bestimmung von relativer Lage und / oder Orientierung zweier Koordinatensysteme zueinander auf verschiedene Weisen betrachtet. Bei Meßaufgaben im Bereich der Werkzeug- und Meßmaschinen sowie der Handlingseinrichtungen lassen sich diese Methoden unterschiedlich anwenden, wobei stets Lage und / oder Orientierung zwischen mindestens zwei zusammenwirkenden Maschineneinheiten, also z.B. zwischen einer Arbeitsspindel und einem Werkstücktisch zu bestimmen ist. Die unterschiedlichen Anwendungsformen unterscheiden sich darin, wie die verschiedenen Koordinatensysteme mit den Maschineneinheiten verknüpft sind. Eine Übersicht verschafft Tabelle 3.

Für die Anwendungsformen nach Tabelle 3, Zeilen 1 bis 4 werden in Figur 9 bis Figur 12 Beispiele aus dem Wekzeugmaschinenbau angegeben.

Einen Überblick über die möglichen Sensortypen einschließlich der jeweiligen geometrischen Zusammenhänge zur Positionsbestimmung gibt die Tabelle 1. Die zeichnerischen Symbole sind für die Beschreibungen verschiedener Meßverfahren vorgesehen.

Weitere zur Darstellung der verschiedenen Meßverfahren benutzte Symbole sind aus Tabelle 2 zu entnehmen.

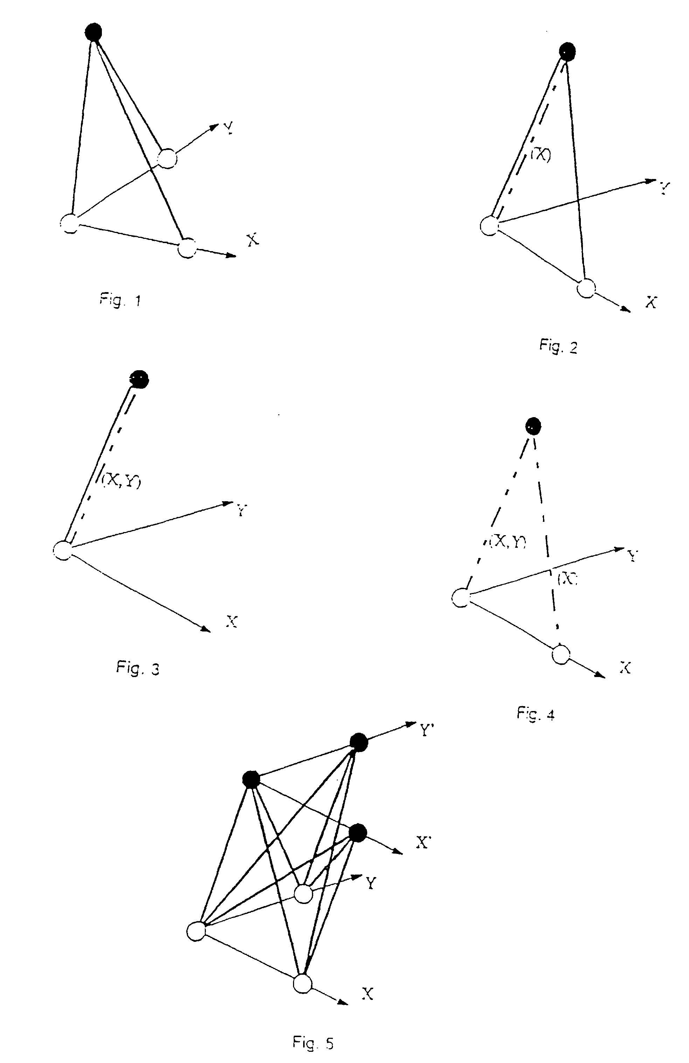

Beispielsweise für den Fall einer einfachen Positionsbestimmung im Raum mittels Abstands- und/oder Winkelmessungen (Sensoren aus der zweiten der o.g. Klassen) gibt es prinzipiell vier verschiedene Möglichkeiten, die jeweils auf drei Einzelmessungen beruhen. Dabei wird stets die Lage eines Objektpunktes im Koordinatensystem der Meßbasis bestimmt. in den Figuren 1 bis 4 ist jeweils diejenige Möglichkeit dargestellt, die mit der geringsten Anzahl von Basispunkten auskommt.

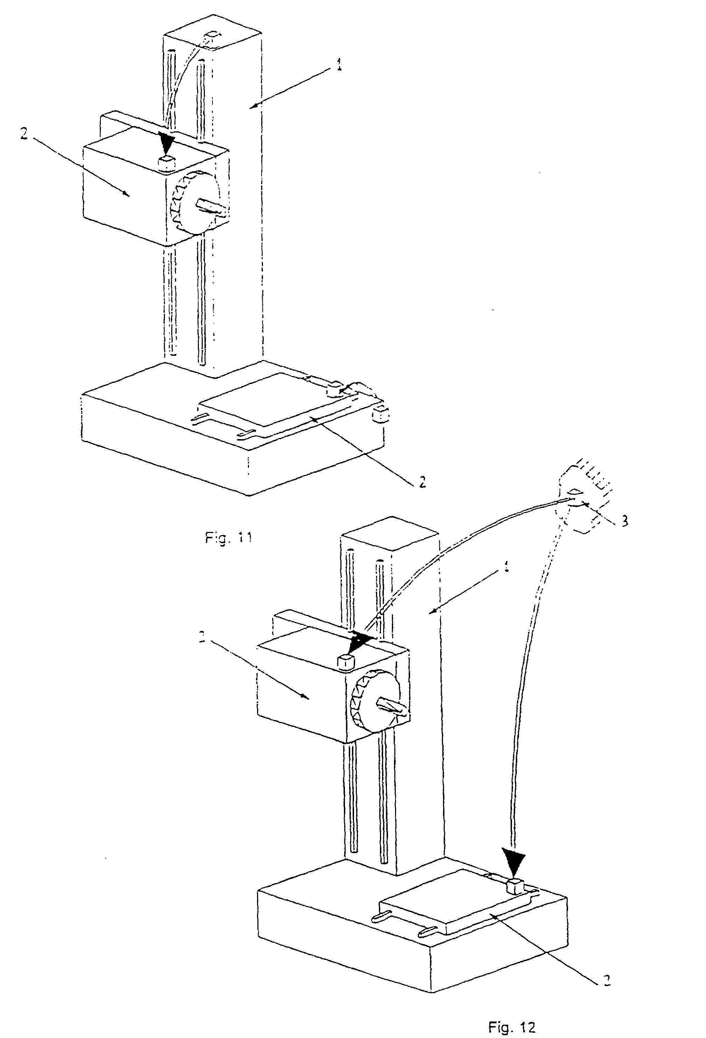

Bei den Anwendungsformen gemäß Tabelle 3, Zeilen 2 bis 5 bzw. nach Figur 10 bis Figur 12 handelt es sich um sogenannte "verkettete Messungen". Sie können z.B. dadurch legitimiert sein, daß mehrere Maschineneinheiten von einer Meßbasis aus kostengünstig vermessen werden können oder daß man erreicht, daß Messungen außerhalb des Maschinen-Arbeitsraumes und damit weniger fehleranfällig durchgeführt werden können. Solche verketteten Messungen werden stets über eine Differenzen-Bildung verknüpft, wobei jeweils gleiche oder gleichwertige Meßprinzipien auf beide einbezogenen Teilmessungen anzuwenden sind. Werden verschiedene Meßprinzipien für die zwei Teilmessungen angewandt, kann die Differenzen-Bildung nur in der Schnittmenge der ausgewerteten Freiheitsgrade (betrachtet im gleichen Koordinatensystem) erfolgen.

### Beispiele:

- Mit der Verkettung von reiner Positions- sowie einer Positions- und Orientierungsmessung kann über die Differenzen-Bildung nur eine Positionsbestimmung durchgeführt werden.
- Eine Differenzen-Bildung aus zwei Orientierungs-Messungen um je zwei Drehachsen läßt sich nur dann durchführen, wenn die beiden Drehachsen jeweils den gleichen Unterraum (in demselben Koordinatensystem betrachtet) aufspannen, wenn sie also in derselben Ebene liegen. Beide Einzelmessungen beinhalten dann Informationen über die gleichen Dreh-Freiheitsgrade.

Verkettete Messungen bedeuten eine Abkehr vom bzw. eine Erweiterung des eigentlichen Prinzips paralleler Sensorik, da hier die parallelsensorischen Einzelmessungen seriell angewandt werden. Die möglichen Vorteile sind deshalb stets gegen die damit verbundenen Einbußen an Meßgenauigkeit abzuwägen.

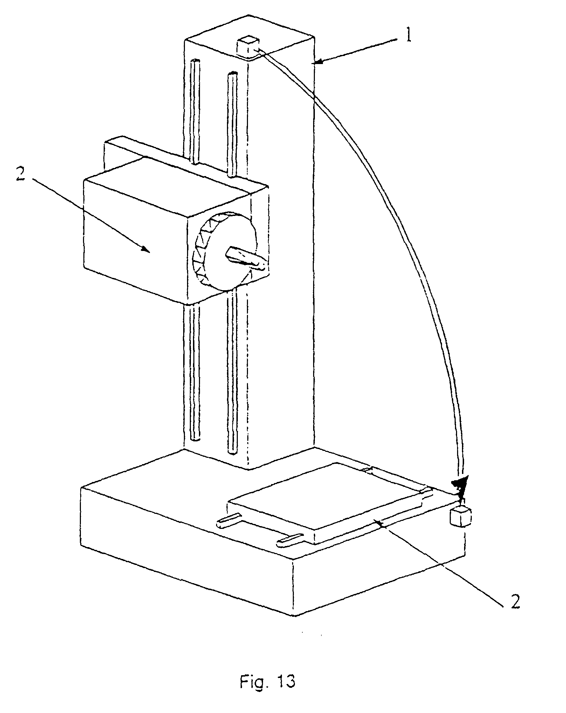

Im Bereich der Werkzeug- und Meßmaschinen sowie der Handlingseinrichtungen sind weitere Anwendungsformen parallelsensorischer Lage- und Orientierungsmessung denkbar. So können beispielsweise die Achsbewegungen der Maschineneinheiten einer Werkzeugmaschine wie bisher üblich konventionell, d.h. direkt und seriell gemessen werden. Über eines der erfindungsgemäßen Meßverfahren lassen sich dann z.B. direkt, wie in Figur 13 dargestellt oder auch über eine hallenfeste Meßbasis, die Verformungen des Maschinenständers zur Durchführung einer Kompensation ermitteln.

Die Bezeichnungen in den Figuren 9 bis 13 bedeuten folgendes: 1 - Maschinenständer, 2 - Maschineneinheit, 3 - hallenfeste Meßbasis, der Doppelpfeil bezeichnet eine allgemeine nicht näher bestimmte Messung (Meßbasis - Meßobjekt - Relation).

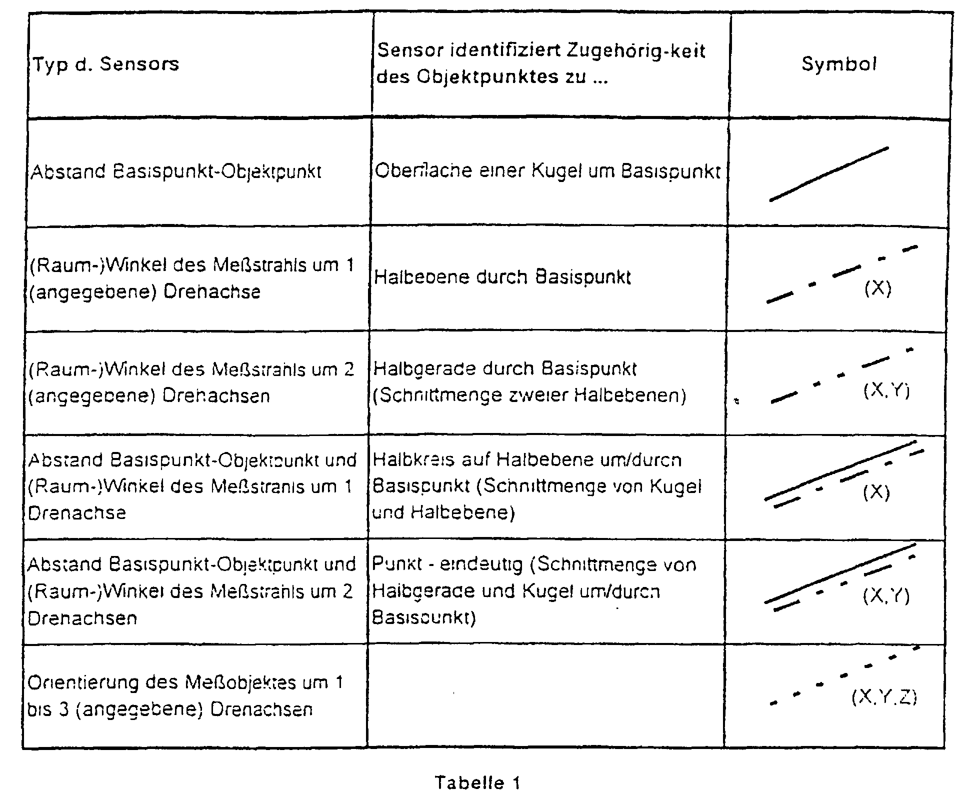

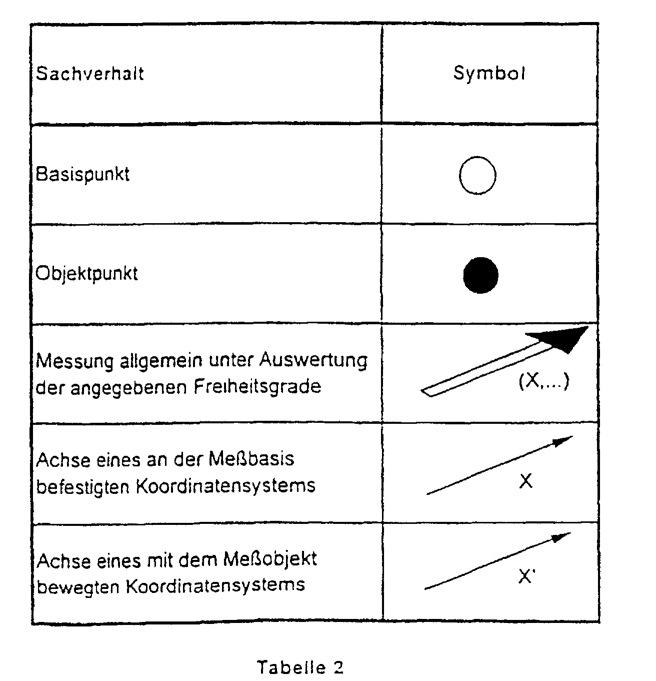

**Tabelle 3**

| Nr | Beschreibung | Halle (z.B. Dach) | Maschinen-Stander | Maschinen-Einheit 1 | Maschinen-Einheit 2 | Bemerkung |
|---|---|---|---|---|---|---|
| 1 | Direkte Messung zwischen zwei Maschineneinheiten | - | - | Basis 1 | Objekt 1 | Prizipiell genaueste Vanante, aber problematisch da meist im Arbeitsraum |
| 2 | Vermessung zweier Maschineneinheiten vom Maschinenstander aus über eine Basis | - | Basis 1 | Objekt 1 | Objekt 2 | |
| 3 | Vermessung zweier Maschineneinheiten vom Maschinenstander aus über zwei Basen | - | Basis 1 + Basis 2 | Objekt 1 von Basis 1 | Objekt 1 von Basis 2 | Kurze Meßstrecken berucksiontigt aber (z.B. thermische) Verformung des Maschinenstanders ohne zusatzliche Messung nicht |
| 4 | Vermessung zweier Maschineneinheiten von einer hallenfesten Basis aus | Basis 1 | | Objekt 1 | Objekt 2 | Meist lange Meßstrecken, d.h fenleranfällig. Fur Raumwinkel-Sensoren eher ungeeignet. |
| 5 | Vermessung zweier Maschineneinheiten von zwei hallenfesten Basen aus | Basis 1 + Basis 2 | | Objekt 1 von Basis 1 | Objekt 1 von Basis 2 | Lange Meßstrecken Berucksichtigt Verschiebungen der Meßbasen gegeneinander ohne zusatzliche Messung nicht |

## Patentansprüche

1. Verfahren zur Messung von Lage und/oder Orientierung zusammenwirkender Maschineneinheiten (2) an Messmaschinen, Handlingseinrichtungen oder insbesondere Werkzeugen, Spindeln und Werkstücken an Werkzeugmaschinen, wobei mindestens eine Maschineneinheit (2) relativ zu einer anderen bewegbar ist und gegebenenfalls Positionen der Maschineneinheiten (2) korrigiert werden, **dadurch gekennzeichnet, dass** bei jeder Maschineneinheit (2) mittels Sensoren, die mindestens zwei der Größen Abstand zwischen zwei je einer der beiden Maschineneinheiten zugeordneten Punkten, Raumwinkel einer Verbindungslinie zwischen zwei je einer der beiden Maschineneinheiten zugeordneten Punkten in einem beliebigen Koordinatensystem, Orientierung einer Maschineneinheit bezüglich der anderen Maschineneinheit in einem beliebigen Koordinatensystem oder eine ihrer Änderungsgrößen messen, gleichzeitig oder im Wesentlichen gleichzeitig, kontinuierlich oder in möglichst kurzen regelmäßigen Abständen, unabhängig von den Antriebsachsen der Maschineneinheiten (2) und ohne die Sensoren oder die Maschineneinheiten (2) in eine spezielle Messposition zu verfahren, die räumliche Lage und/oder Orientierung der Maschineneinheiten (2) zueinander oder der Maschineneinheiten (2) zu einem gemeinsamen Bezugssystem (3) oder der Maschineneinheiten (2) zu verschiedenen Bezugssystemen gemessen wird.

2. Verfahren nach Anspruch 1, **dadurch gekennzeichnet, dass** nach Messung der räumlichen Lage und/oder Orientierung der Maschineneinheiten (2) zu einem gemeinsamen Bezugssystem (3) anschließend die Lage und/oder Orientierung der Maschineneinheiten (2) zueinander bestimmt wird.

3. Verfahren nach Anspruch 1 oder 2, **dadurch gekennzeichnet, dass** nach Messung der räumlichen Lage und/oder Orientierung der Maschineneinheiten (2) zu verschiedenen Bezugssystemen (3) und nach Messung oder Bestimmung der Lage und/oder Orientierung der Bezugssysteme zueinander die Lage und/oder Orientierung der Maschineneinheiten (2) zueinander bestimmt wird.

4. Verfahren nach Anspruch 1, **dadurch gekennzeichnet, dass** die Sensoren berührungslos messen.

5. Verfahren nach mindestens einem der vorhergehenden Ansprüche, **dadurch gekennzeichnet, dass** mindestens einer der Sensoren den Abstand zwischen einem Punkt einer Messbasis und einem Punkt der Maschineneinheit (2) misst.

6. Verfahren nach mindestens einem der vorhergehenden Ansprüche, **dadurch gekennzeichnet, dass** mindestens einer der Sensoren den Raumwinkel des Messstrahles zwischen einem Punkt der Messbasis und einem Punkt der Maschineneinheit um mindestens eine Achse des Bezugssystems misst.

7. Verfahren nach mindestens einem der vorhergehenden Ansprüche, **dadurch gekennzeichnet, dass** mindestens einer der Sensoren die Verdrehung der Maschineneinheit (2) (Orientierung) um mindestens eine der Achsen des Bezugssystems (3) misst.

8. Verfahren nach mindestens einem der vorhergehenden Ansprüche, **dadurch gekennzeichnet, dass** bei Verwendung mehrerer Messpunkte an der Maschineneinheit (2) oder an der Messbasis die Abstände der Punkte untereinander bekannt sind oder gemessen werden.

9. Vorrichtung zur Messung von Lage und/oder Orientierung zusammenwirkender Maschineneinheiten (2) an Messmaschinen, Handlingseinrichtungen oder insbesondere Werkzeugen, Spindeln und Werkstücken an Werkzeugmaschinen, wobei mindestens eine Maschineneinheit (2) relativ zu einer anderen bewegbar ist und gegebenenfalls Positionen der Maschineneinheiten (2) korrigierbar sind,
**dadurch gekennzeichnet, dass** bei jeder Maschineneinheit (2) mittels Sensoren mindestens zwei der Größen Abstand zwischen zwei je einer der beiden Maschineneinheiten zugeordneten Punkten, Raumwinkel einer Verbindungslinie zwischen zwei je einer der beiden Maschineneinheiten zugeordneten Punkten in einem beliebigen Koordinatensystem, Orientierung einer Maschineneinheit bezüglich der anderen Maschineneinheit in einem beliebigen Koordinatensystem oder eine ihrer Änderungsgrößen messbar sind, gleichzeitig oder im Wesentlichen gleichzeitig, kontinuierlich oder in möglichst kurzen regelmäßigen Abständen, unabhängig von den Antriebsachsen der Maschineneinheiten (2) und ohne die Sensoren oder die Maschineneinheiten (2) in eine spezielle Messposition verfahren zu müssen, die räumliche Lage und/oder Orientierung der Maschineneinheiten (2) zueinander oder der Maschineneinheiten (2) zu einem gemeinsamen Bezugssystem (3) oder der Maschineneinheiten (2) zu verschiedenen Bezugssystemen messbar ist.

10. Vorrichtung nach Anspruch 9, **dadurch gekennzeichnet, dass** mindestens einer der Sensoren den Abstand zwischen einem Punkt einer Messbasis und einem Punkt der Maschineneinheit (2) messen kann und dass dieser Sensor ein Laser-Interferometer ist.

11. Vorrichtung nach Anspruch 9, **dadurch gekennzeichnet, dass** mindestens einer der Sensoren die Verdrehung der Maschineneinheit (2) (Orientierung) um mindestens eine der Achsen des Bezugssystems (3) messen kann und dass dieser Sensor ein Ringlaser oder ein Kreisel ist.

12. Vorrichtung nach Anspruch 10 oder 11, **dadurch gekennzeichnet, dass** die Sensoren an den Maschineneinheiten selbst an mindestens einem Punkt des am Maschinengestell befestigten Koordinatensystems oder an Gegenständen in der Umgebung als Hallenfeste Messbasis angeordnet sind.

## Claims

1. Method of detecting the location and/or orientation of jointly operating machine components in instrumentational and manipulating machines (2) and especially bits, spindles, and work in machine tools, whereby at least one machine component (2) moves relative to another and whereby the locations of the components (2) can be corrected when necessary, **characterized in that** associated with each component (2) are sensors that can simultaneously or essentially simultaneously and continuously or at the briefest possible equal intervals, sense at least two of the parameters distance, spatial angle, and orientation or a variable thereof independently of the shafts that drive the machinery and with no need to advance either the sensors or the components (2) into special measuring positions, the sensors measuring the location and/or orientation in the plane or in space of the components (2) relative to one another, to a common reference system (3) or to various reference systems.

2. Method as in Claim 1, **characterized in that** the location and/or orientation of the machine components (2) in the plane or in space relative to a common reference system (3) is detected, subsequent to which the location and/or orientation of the machine components (2) relative to each other is detected.

3. Method as in Claim 1 or 2, **characterized in that** the location and/or orientation of the machine components (2) in the plane or in space relative to various reference systems (3) is detected, subsequent to which the location and/or orientation of the reference systems relative to each other is measured or detected, subsequent to which the location and/or orientation of the machine components (2) relative to each other is detected.

4. Method as in Claim 1, **characterized in that** the sensors detect remotely.

5. Method as in at least one of the foregoing claims, **characterized in that** at least one of the sensors measures the distance between a point in a basis and a point on a machine component (2).

6. Method as in at least one of the foregoing claims, **characterized in that** at least one of the sensors measures the spatial angle of the measuring beam around at least one axis of the reference system between a point in the basis and a point on a machine component.

7. Method as in at least one of the foregoing claims, **characterized in that** at least one of the sensors measures the rotation of the machine component (2) (its orientation) around at least one of the axes of the reference system (3).

8. Method as in at least one of the forgoing claims, **characterized in that**, when several points on the machine component (2) or in the basis are employed, the distances between the points are either known or measured.

9. Device to measure the location and/or orientation of interacting machine units (2) at measuring machines, handling facilities or, particularly, tools, spindles and toolpieces at machine tools, with at least one machine unit (2) being relatively movable to another one and with it being possible, if required, to correct positions of machine units (2), **characterized in that** it is possible with each machine unit (2) by way of sensors to measure at least two of the variables distance between two points allocated to one each of the two machine units, spatial angle of a connection line between two points allocated to one each of the two machine units in any coordinate system, orientation of a machine unit relative to the other machine unit in any coordinate system or one of its alteration variables; at the same time or by and large at the same time, it is possible to measure the spatial position and/or orientation of the machine units (2) to each other or of the machine units (2) to a common reference system (3) or of the machine units (2) to various reference systems continuously or in the shortest possible regular intervals, independently of the drive axes of the machine units (2) and without the need to have to move the sensors or the machine units (2) into a special measuring position.

10. Device according to Claim 9, **characterized in that** at least one of the sensors can measure the distance between one point of a measuring basis and one point of the machine unit (2) and that this sensor is a laser interferometer.

11. Device according to Claim 9, **characterized in that** at least one of the sensors can measuer the torsion of the machine unit (2) (orientation) around at least one of the axes of the reference system (3) and that this sensor is an annular laser or a gyroscope.

12. Device according to Claim 10 or 11, **characterized in that** the sensors are positioned on the machine components themselves, at at least one point in the coordinate system secured to the machine support, or, to things in the environment, constituting a shop-stationary measurement system.

## Revendications

1. Procédé permettant de mesurer la position et/ou l'orientation des différents éléments constitutifs (2) des machines de mesure, des dispositifs manipulateurs et notamment des outils, des arbres et des pièces de machines-outils, dans lesquels au moins un élément de machine (2) peut se déplacer par rapport à un autre et dans lesquels les positions des éléments de machine (2) peuvent éventuellement être corrigées, **caractérisé en ce que** chaque élément de machine (2) comporte des capteurs qui mesurent au moins deux des grandeurs, à savoir la distance entre deux points affectés chacun à l'un des deux éléments de machine, l'angle spatial d'une ligne de liaison entre deux points affectés chacun à un des deux éléments de machine dans un système de coordonnées quelconque, l'orientation d'un élément de machine par rapport à l'autre dans un système de coordonnées quelconque, ou une de leurs variations, la position et/ou l'orientation dans l'espace des éléments de machine (2) les uns par rapport aux autres ou des éléments de machine (2) par rapport à un système de coordonnées commun (3) ou des éléments de machine (2) par rapport à différents systèmes de coordonnées étant mesurées simultanément ou sensiblement simultanément, en continu ou à des intervalles réguliers les plus courts possibles, indépendamment des axes d'entraînement des éléments de machine (2) et sans mettre les capteurs ou les éléments dans une position de mesure particulière.

2. Procédé selon la revendication 1, c**aractérisé en ce qu**'après la mesure de la position et/ou de l'orientation dans l'espace des éléments de machine (2) par rapport à un système de coordonnées commun (3), la position et/ou l'orientation des éléments de machine (2) les uns par rapport aux autres sont ensuite mesurées.

3. Procédé selon la revendication1 ou 2, **caractérisé en ce qu**'après la mesure de la position et/ou de l'orientation dans l'espace des éléments de machine (2) par rapport à différents systèmes de coordonnées (3) et après la mesure ou la détermination de la position et/ou de l'orientation des systèmes de coordonnées les uns par rapport aux autres, la position et/ou l'orientation des éléments de machine (2) les uns par rapport aux autres sont ensuite mesurées.

4. Procédé selon la revendication1, **caractérisé en ce que** les capteurs mesurent sans contact.

5. Procédé selon au moins une des revendications précédentes, **caractérisé en ce qu'**au moins un des capteurs mesure la distance entre un point d'une base de mesure et un point de l'élément de machine (2).

6. Procédé selon au moins une des revendications précédentes, **caractérisé en ce qu**'au moins un des capteurs mesure l'angle spatial du faisceau de mesure entre un point de la base de mesure et un point de l'élément de machine autour d'un axe du système de coordonnées au moins.

7. Procédé selon au moins une des revendications précédentes, **caractérisé en ce qu**'au moins un des capteurs mesure la rotation de l'élément de machine (2) (orientation) autour d'un des axes du système de coordonnées (3) au moins.

8. Procédé selon au moins une des revendications précédentes, **caractérisé en ce que** les distances entre les points sont connues ou mesurées entre elles lorsque plusieurs points de mesure sont utilisés sur l'élément de machine (2) ou dans la base de mesure.

9. Dispositif permettant de mesurer la position et/ou l'orientation des différents éléments constitutifs (2) des machines de mesure, des dispositifs manipulateurs et notamment des outils, des arbres et des pièces de machines-outils, dans lesquels au moins un élément de machine (2) peut se déplacer par rapport à un autre et dans lesquels les positions des éléments de machine sont éventuellement corrigeables, **caractérisé en ce que** chaque élément de machine (2) comporte des capteurs permettant de mesurer au moins deux grandeurs, à savoir la distance entre deux points affectés chacun à l'un des deux éléments de machine, l'angle spatial d'une ligne de liaison entre deux points affectés chacun à un des deux éléments de machine dans un système de coordonnées quelconque, l'orientation d'un élément par rapport à l'autre élément de machine dans un système de coordonnées quelconque, ou une de leurs variations, et permettant de mesurer la position et/ou l'orientation dans l'espace des éléments de machine (2) les uns par rapport aux autres ou des éléments de machine (2) par rapport à un système de coordonnées commun (3) ou des éléments de machine (2) par rapport à différents systèmes de coordonnées étant mesurables simultanément ou sensiblement simultanément, en continu ou à des intervalles réguliers les plus courts possibles, indépendamment des axes d'entraînement des éléments de machine (2) et sans qu'il ne soit nécessaire de mettre les capteurs ou les éléments dans une position de mesure particulière.

10. Dispositif selon la revendication 9, **caractérisé en ce qu**'au moins un des capteurs peut mesurer la distance entre un point d'une base de mesure et un point de l'élément de machine (2).

11. Procédé selon la revendication 9, **caractérisé en ce qu**'au moins un des capteurs peut mesurer la rotation de l'élément de machine (2) (orientation) autour d'un des axes du système de coordonnées (3) au moins.

12. Dispositif selon la revendication 10 ou 11, **caractérisé en ce que** les capteurs sont disposés sur les éléments de machine eux-mêmes sur au moins un point du système de coordonnées fixé sur le bâti de la machine ou sur des objets dans l'environnement en tant que base de mesure établie stationnairement dans un hall.
